# EUROPÄISCHE PATENTSCHRIFT

(11) **EP 0 399 075 B1**
(45) Veröffentlichungstag und Bekanntmachung des Hinweises auf die Patenterteilung: **07.04.1993**
(21) Anmeldenummer: 89109392.4
(22) Anmeldetag: 24.05.1989
(51) Int. Cl.: B62K 19/16, B62K 3/10, B29C 67/14

(54) **Fahrradrahmen und Verfahren zu seiner Herstellung**
Bicycle frame and method for its manufacture
Cadre de bicyclette et son procédé de fabrication

(43) Veröffentlichungstag der Anmeldung: 28.11.1990
(73) Patentinhaber: LOOK S.A., 58004 Nevers Cédex (FR)
(72) Erfinder: Van Raemdonck, Joris, B-2768 Bazel(Kruibeke) (BE); Couturet, Jean-Pierre, F-58000 Nevers (FR)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- WO-A-87/06901
- WO-A-89/05753
- GB-A- 1 070 805
- US-A- 4 493 749

## Beschreibung

Die Erfindung betrifft ein Verfahren zur Herstellung eines zumindest ein Sattelrohr, ein Diagonalrohr, ein Horizontalrohr sowie eine Hinterradgabel umfassenden Fahrradrahmens mit einem Tretlager, einer Sattel-Befestigungshülse und einem Lenkstangen-Führungshülse, wobei aus Sattelrohr, Diagonalrohr und Horizontalrohr ein geschlossener, zumindest im wesentlichen dreieckförmiger Grundrahmen mit fest angeschlossener Hinterradgabel und integriertem Tretlager gebildet wird. Ferner ist die Erfindung auf einen Fahrradrahmen, insbesondere einen Monobloc-Rahmen gerichtet, der insbesondere nach dem erwähnten Verfahren gefertigt ist.

Neben der Fertigung von Fahrradrahmen aus Metallrohren ist es auch bereits bekannt, solche Rahmen aus sog. Compositmaterial herzustellen, d.h. aus faser- und/oder gewebeverstärktem Kunststoffmaterial, das zu Rohren geformt wird, welche dann in geheizten Formen in die jeweils gewünschte Gestalt überführt werden.

Abgesehen davon, daß nach den bekannten Verfahren die Fertigung häufig aufwendig ist und die erreichbaren ästhetischen Gestaltungen zu wünschen übriglassen, erfordert die Notwendigkeit der Herstellung unterschiedlicher Rahmengrößen einen beträchtlichen Mehraufwand in der Fertigung und der Zwischenlagerhaltung.

Aus der WO 87/06901 ist ein Fahrradrahmen bekannt, der einen im wesentlichen dreieckförmigen Grundrahmen mit fest angeschlossener Hinterradgabel und integriertem Tretlager aufweist, wobei der Grundrahmen aus Sattelrohr, Diagonalrohr und Horizontalrohr besteht, die gemeinsam den geschlossenen Grundrahmen bilden. Die spezielle, in sich geschlossene Ausgestaltung dieses bekannten Rahmens erfordert ebenfalls die Notwendigkeit der Herstellung unterschiedlicher Rahmengrößen und bedingt somit einen erheblichen Aufwand in der Fertigung und der Lagerhaltung.

Aufgabe der Erfindung ist es, ein Fertigungsverfahren zur Herstellung von Fahrradrahmen zu schaffen, das zu beträchtlichen Einsparungen in den Fertigungskosten führt, eine hohe Stabilität der Rahmen bei geringem Gewicht gewährleistet und hinsichtlich der Formgestaltung weitgehende Freiheiten zuläßt. Ferner richtet sich die Erfindung auf die Ausgestaltung eines hohe Festigkeit aufweisenden, geringes Gewicht bestitzenden und ästhetisch ansprechenden Fahrradrahmens, der auf äußerst einfache Weise an die Erfordernisse unterschiedlicher Rahmengrößen angepaßt werden kann.

Gelöst wird der das Verfahren betreffende Teil der Erfindung dadurch, daß der Grundrahmen in der Weise gebildet wird, daß einerseits das Sattelrohr die Verbindungsstelle mit dem Horizontalrohr in Form eines ersten ablängbaren Abschnitts und andererseits das Diagonalrohr die Verbindungsstelle mit dem Horizontalrohr in Form eines zweiten ablängbaren Abschnitts überragt, und daß nach der über die ablängbaren Abschnitte erforlgenden Festlegung der jeweiligen Rahmengröße eine Verbindung dieser Abschnitte mit der Lenkstangen-Führungshülse bzw. der Sattel-Befestigungshülse vorgenommen wird.

Durch die Schaffung von lediglich zwei ablängbaren Abschnitten wird es möglich, einen Grundrahmen zu fertigen, der für alle Rahmengrößen identisch ist und durch äußerst einfache und schnell durchzuführende Maßnahmen in die jeweils gewünschte Rahmengröße überführt werden kann.

Ein gemäß der Erfindung ausgebildeter Fahrradrahmen, bestehend aus einem Sattelrohr, einem Diagonalrohr, einem Horizontalrohr, einer Hinterradgabel, einer integrierten Tretlageraufnahme, einer Lenkstangen-Führungshülse sowie einer Sattel-Befestigungshülse zeichnet sich dadurch aus, daß sich an die Verbindungsstellen zwischen Sattelrohr und Horizontalrohr bzw. Horizontalrohr und Diagonalrohr ablängbare Abschnitte anschließen, die zur Verbindung mit einer Sattel-Befestigungshülse bzw. einer Lenkstangen-Führungshülse bestimmt sind.

Besonders vorteilhafte Ausgestaltungen des Verfahrens nach der Erfindung und insbesondere auch Ausgestaltungen des Fahrradrahmens nach der Erfindung sind in den Unteransprüchen angegeben.

Die Erfindung wird nachfolgend anhand eines Ausführungsbeispiels unter Bezugnahme auf die Zeichnung näher erläutert;
in der Zeichnung zeigt:
- Fig. 1: eine schematische Darstellung zur Erläuterung einer möglichen Grundform eines Monobloc-Rahmens nach der Erfindung,
- Fig. 2: eine Prinzipdarstellung zur Erläuterung der Erzielung unterschiedlicher Rahmengrößen bei einer Rahmenkonstruktion nach Fig. 1,
- Fig. 3: zwei verschiedene Stufen in der Fertigung eines Sattelrohres mit integriertem Metallgehäuse zur Tretlageraufnahme zur Verwendung bei einem Rahmen nach Fig. 1,
- Fig. 4: eine schematisierte Darstellung zur Erläuterung der Fertigung einer einteiligen Einheit aus Diagonalrohr und Hinterradgabel,
- Fig. 5: eine schematische Darstellung zur Erläuterung der Fixierung des Horizontalrohrs,
- Fig. 6: eine schematisierte Darstellung eines entsprechend einer bestimmten Rahmengröße gefertigten Rahmens, und
- Fig. 7: eine ebenfalls schematische Darstellung eines fertigen Rahmens mit integrierten Zusatzorganen.

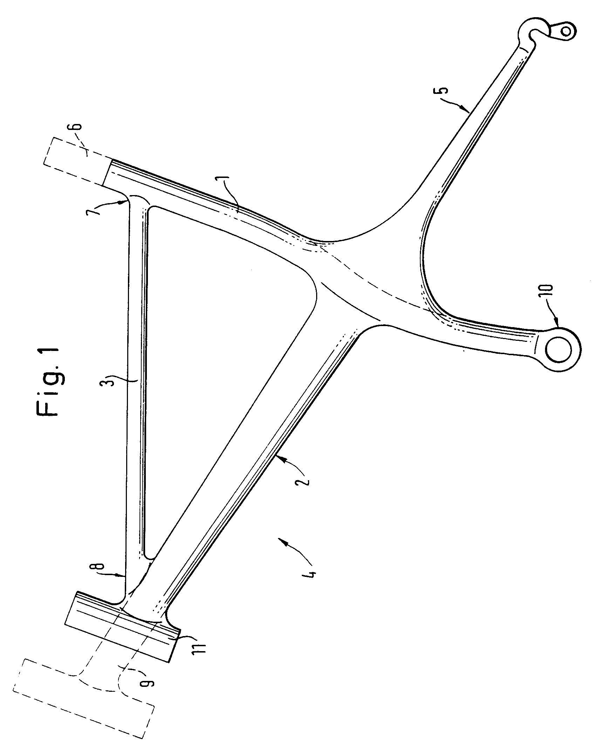

Fig. 1 zeigt den Grundaufbau 4 einer möglichen Ausführungsvariante eines Fahrradrahmens nach der Erfindung. Dieser Rahmen besteht aus einem im oberen Bereich geraden und etwa ab der Mittel leicht kreisbogenförmig nach vorne gebogenen Sattelrohrs 1, dessen Ende etwa in der Verlängerung der Achse des geraden Sattelrohrabschnittes gelegen ist. In dieses untere Ende des Sattelrohres 1 ist eine metallische Aufnahmehülse für dem Tretlager 10 integriert.
Ein Diagonalrohr 2 ist an seinem vorderen Ende mit einem ablängbaren Abschnitt 9 versehen und zur Aufnahme einer Lenkstangen-Führungshülse 11 bestimmt. Nach hinten zu gabelt sich das Diagonalrohr 2, so daß eine einheitliche Anordnung von Hinterradgabel 5 und Diagonalrohr 2 gegeben ist. Die Verbindung zwischen Diagonalrohr 2 und Sattelrohr 1 wird im einzelnen noch erläutert.

Ein Horizontalrohr 3 erstreckt sich zwischen einer im vorderen Bereich des Diagonalrohrs 2 gelegenen Verbindungsstelle 8 und einer Sattelrohr-Verbindungsstelle 7. Über dise Verbindungsstelle 7 hinaus erstreckt sich ein ablängbarer Abschnitt 6 des Sattelrohrs 1.

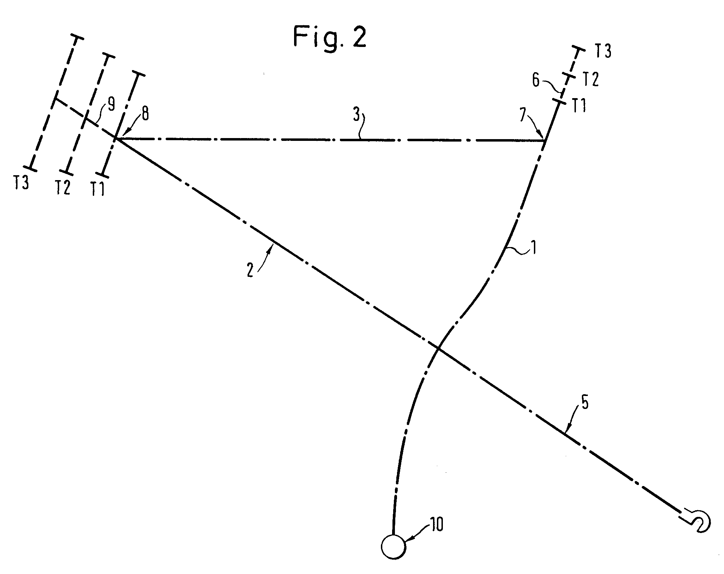

Die schematische Darstellung nach Fig. 2 zeigt wiederum die Grundkonzeption des Rahmens nach der Erfindung, bestehend aus Sattelrohr 1, Diagonalrohr 2 mit Hinterradgabel 5 und Horizontalrohr 3. In dieser Darstellung ist zu erkennen, daß sich die ablängbaren Bereiche 6, 9 von Sattelrohr 1 und Diagonalrohr 2 über die Verbindungsstellen 7, 8 hinaus erstrecken, so daß durch entsprechende Ablängvorgänge ausgehend von dem gefertigten Standard-Rahmen in der Größe T3 die kleineren Größen T2 und T1 durch einfache Verkürzung dieser ablängbaren Abschnitte 6,9 geschaffen werden können. Nach dem jeweiligen Ablängvorgang können dann die erforderliche Lenkstangen-Führungshülse 11 und die Sattel-Befestigungshülse 12 angebracht und vorzugsweise durch Kleben fixiert werden.

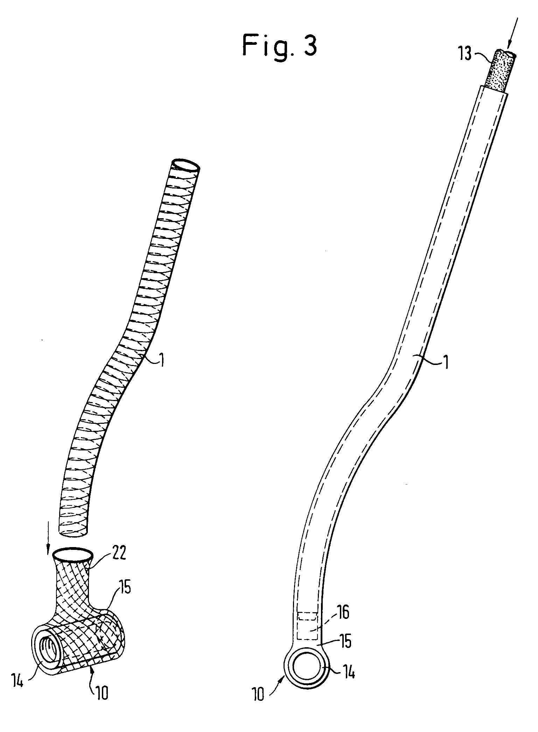

Die Darstellungen in Fig. 3 zeigen eine bevorzugte Ausführungsform der Herstellung des Sattelrohres 1 und dessen Verbindung mit dem Tretlager-Aufnahmegehäuse.
Das Sattelrohr 1 wird aus einem Compositmaterial in Form eines faser- und/oder gewebeverstärkten Kunststoffmaterials, insbesondere unter Verwendung von Carbonfasern hergestellt, und mit dem gleichen Material wird ein rohrförmiges Metallgehäuse 14 mit Innengewinde, das zur Tretlageraufnahme bestimmt ist, in der Weise umwickelt, daß zum einen nur noch die stirnseitigen Bereiche dieses Metallgehäuses 1 frei sind und andererseits eine radial abstehende Aufnahmehülse 22 geschaffen wird, die durch die Wickelbandage 15 gebildet ist und das Ende des Sattelrohres 1, das in Richtung des Pfeiles eingeführt werden kann, aufnimmt.

Die rechte Darstellung in Fig. 3 zeigt die Anordnung eines elastischen Schlauches 13 im Sattelrohr 1 und die fertige Verbindung zwischen Sattelrohr 1 und Metallgehäuse 14. Der unter Druck setzbare Schlauch 13 bildet den Formkern für das Sattelrohrmaterial und ist an seinem unteren Ende geschlossen. Wenn das Sattelrohr 1 in die zugehörige Form eingebracht und in die endgültig gewünschte Gestalt gebracht wird, dann steht der Schlauch 13 unter Druck. Um einen hinsichtlich der Festigkeit optimalen Übergang zwischen Metallgehäuse 14, Wickelbandage 15 und Sattelrohr 1 zu erzielen, wird in diesen Übergangsbereich ein aushärtbarer Schaum 16 eingebracht, der durch den Schlauch 13 derart positioniert werden kann, daß ein hohlraumfreier Übergang erzielt wird.

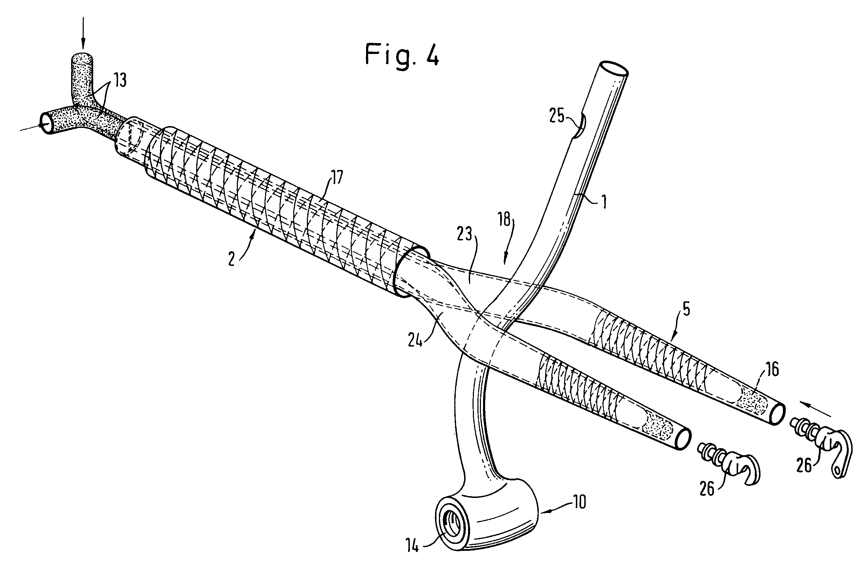

Fig. 4 zeigt den Aufbau des Diagonalrohrs 2.
Dieses Diagonalrohr 2 besteht aus zwei Einzelrohren 23,24 von vergleichbarem Aufbau wie das Sattelrohr 1, und diese Einzelrohre 23, 24 sind im Bereich zwischen Sattelrohr 1 und dem Bereich der Lenkstangen-Führungshülse 11 mit einer bandagenförmigen Ummantelung 17 versehen, so daß sich in diesem Bereich eine sich wie ein kräftiges Einzelrohr verhaltende Anordnung ergibt.

Im Bereich des Sattelrohres 1 gabeln sich die beiden Einzelrohre 23, 24, so daß die Hinterradgabel 5 entsteht, wobei mit den Enden der Einzelrohre die Aufnahmeklauen 26 zur Halterung der Hinterradachse fest verbunden werden.

In den Einzelrohren 23, 24 sind wiederum elastische Schläuche 13 angeordnet, die unter Druck setzbar sind und in gleicher Weise wie bereits im Zusammenhang mit Fig.3 beschrieben, auch dazu genutzt werden, aushärtbaren Schaum 16 in den Übergangsbereich zu den Aufnahmeklauen 26 zu drücken, so daß diese Klauen 26 einerseits fest verankert werden und andererseits während der Ausformung eine gute Kontinuität des Kompressionsdruckes gewährleistet wird. Die Aufnahmeklauen 26 sind vorzugsweise mit Ringbünden versehen, welche die Verankerung begünstigen.

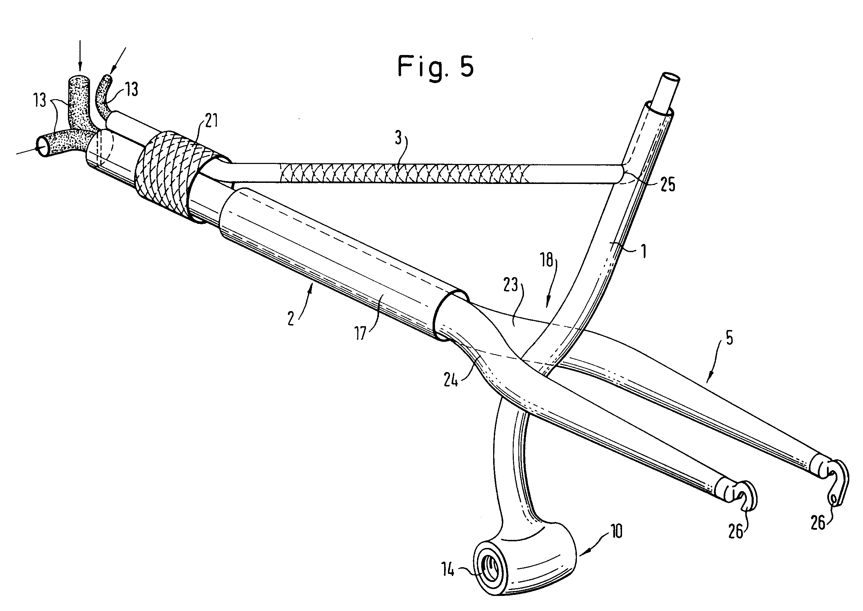

Fig. 5 zeigt insbesondere die Verbindung des Horizontalrohrs 3 mit dem Sattelrohr 1 und dem Diagonalrohr 2. Das Horizontalrohr 3, das im Vergleich zu Sattelrohr 1 und Diagonalrohr 2 einen deutlich geringeren Durchmesser besitzen kann, ist von gleichem Aufbau wie die übrigen Rohre und weist ebenfalls einen unter Druck setzbaren Schlauch auf.

Im Bereich des vorderen Endes des Diagonalrohres 2 ist das Horizontalrohr so abgebogen, daß es auf einem vorgebbaren Abschnitt parallel zum Diagonalrohr verläuft und somit durch eine Wickelbandage 21 mit dem Diagonalrohr 2 fest verbunden werden kann.

Das Sattelrohr 1 ist mit einer Öffnung 25 versehen, durch die ein Ende des Horizontalrohrs gesteckt und dann vorzugsweise nach oben abgewinkelt im Sattelrohr 1 angeordnet werden kann.

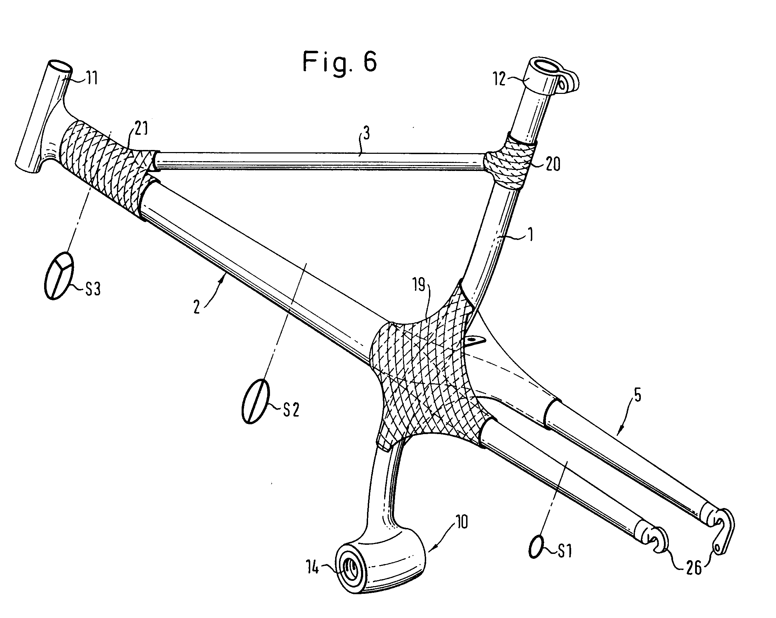

Fig. 6 zeigt den fertigen Rahmen, wobei die zur Schaffung der Verbindungen zwischen den einzelnen Rohren verwendeten Bandagen 19,20,21 deutlich gekennzeichnet sind.

Lenkstangen-Führungshülse 11 und Sattel-Befestigungshülse 12 sind vorzugsweise durch Kleben mit den entsprechenden Rohrenden verbunden. Die Bandagenwicklungen 19,20,21 bestehen vorzugsweise aus dem gleichen Material, wie es zum Aufbau der Rohre selbst verwendet wird, und sie sind so ausgeführt, daß sich unter Gewährleistung der notwendigen Festigkeit stets auch ein bündiger und ästhetisch einwandfreier Übergang zwischen den verschiedenen Rohren ergibt.

Bei der endgültigen Formgebung des Rahmens in einer einheitlichen Form werden die zur Bildung des Diagonalrohres 2 und der hinteren Gabel 5 bestimmten Einzelrohre entsprechend den Querschnittsdarstellungen S1,S2 und S3 verformt, d.h. es werden stehend ovale Querschnitte erzeugt, die sich hinsichtlich der Festigkeit und auch des äußeren Erscheinungsbildes vorteilhaft auswirken. In denjenigen Bereichen, in denen Einzelrohre aneinanderliegen, erfolgt in der Form auch eine unmittelbare gegenseitige Verbindung dieser Rohre über das Kunststoffmaterial.

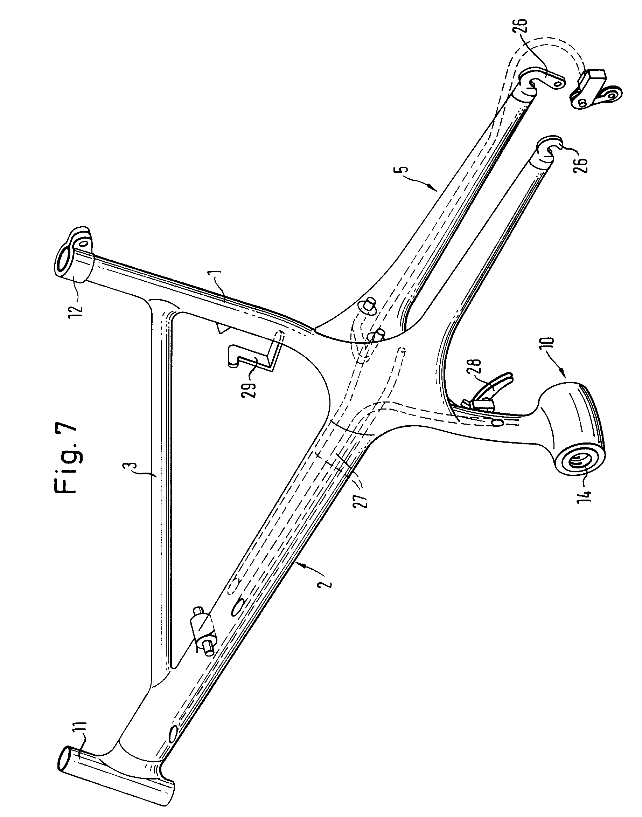

Fig. 7 verdeutlicht, daß beim Aufbau des erfindungsgemäßen Rahmens problemfrei Zusatzorgane und Elemente integriert und verankert werden können, wie dies beispielsweise für Kabelführungen 27, Kettenwerferträger 28 und Halterungen 29 für Flaschen und dergl. angedeutet ist.

### Bezugszeichenliste

- 1: Sattelrohr
- 2: Diagonalrohr
- 3: Horizontalrohr
- 4: Grundrahmen
- 5: Hinterradgabel
- 6: ablängbarer Abschnitt
- 7: Verbindungsstelle
- 8: Verbindungsstelle
- 9: ablängbarer Abschnitt
- 10: Tretlager
- 11: Lenkstangen-Führungshülse
- 12: Sattel-Befestigungshülse
- 13: Schlauch
- 14: Metallgehäuse
- 15: Wickelbandage
- 16: Schaum
- 17: Ummantelung
- 18: Gabelungsbereich
- 19: Wickelbandage
- 20: Wickelbandage
- 21: Wickelbandage
- 22: Aufnahmehülse
- 23: Einzelrohr
- 24: Einzelrohr
- 25: Öffnung
- 26: Aufnahmeklauen
- 27: Kabelführung
- 28: Kettenwerfer-Träger
- 29: Halter für Flaschen und dergl.

## Patentansprüche

1. Verfahren zur Herstellung eines zumindest ein Sattelrohr, ein Diagonalrohr, ein Horizontalrohr sowie eine Hinterradgabel umfassenden Fahrradrahmens mit einem Tretlager, einer Sattel-Befestigungshülse und einer Lenkstangen-Führungshülse, wobei aus Sattelrohr (1), Diagonalrohr (2) und Horizontalrohr (3) ein geschlossener, zumindest im wesentlichen dreieckförmiger Grundrahmen (4) mit fest angeschlossener Hinterradgabel (5) und integriertem Tretlager (10) gebildet wird,
dadurch **gekennzeichnet,**
daß der Grundrahmen (4) in der Weise gebildet wird, daß einerseits das Sattelrohr (1) die Verbindungsstelle (7) mit dem Horizontalrohr (3) in Form eines ersten ablängbaren Abschnitts (6) und andererseits das Diagonalrohr (2) die Verbindungsstelle (8) mit dem Horizontalrohr (3) in Form eines zweiten ablängbaren Abschnitts (9) überragt, und daß nach der über die ablängbaren Abschnitte (6, 9) erfolgenden Festlegung der jeweiligen Rahmengröße (T1, T2, T3) eine Verbindung dieser Abschnitte (6, 9) mit der Lenkstangen-Führungshülse (11) bzw. der Sattel-Befestigungshülse (12) vorgenommen wird.

2. Verfahren nach Anspruch 1, dadurch gekennzeichnet, daß die einzelnen Rohre (1,2,3,5) aus faser- und/oder gewebeverstärktem Kunststoffmaterial, insbesondere unter Verwendung von Carbonfasermaterial gefertigt werden, wobei diese Materialien um einen Kern in Form eines an eine Druckquelle anschließbaren, an einem Ende geschlossenen Schlauches (13) gewickelt und in einer heizbaren Form bei unter Druck stehendem Schlauch (13) in der gewünschten Gestalt ausgehärtet werden.

3. Verfahren nach Anspruch 1 oder 2, dadurch gekennzeichnet, daß das untere Ende des Sattelrohres (1) mittels Wickelbandagen (15) aus faser- und/oder gewebeverstärktem Kunststoffmaterial mit einem das Tretlager aufnehmenden Metallgehäuse (14) verbunden wird, wobei die Bandagen (15) sowohl um das Metallgehäuse (14) als auch um das untere Ende des Sattelrohres (1) gewickelt werden und eine Aushärtung und dauerhafte Verbindung in der aufheizbaren Form erfolgt.

4. Verfahren nach Anspruch 3, dadurch gekennzeichnet, daß die Bandagen (15) zunächst um das Metallgehäuse (14) gewickelt werden und dabei aus den Bandagen eine Aufnahmehülse (22) geformt wird, in die dann das Ende des Sattelrohres (1) eingeführt und schließlich in der jeweiligen Form unter Wärme- und Druckeinwirkung über die Bandage (15) mit dem Metallgehäuse (14) fest verbunden wird.

5. Verfahren nach einem der vorhergehenden Ansprüche, dadurch gekennzeichnet, daß in den Bereich des jeweils zu verschließenden Rohrendes ein aushärtbarer Schaum (16) eingebracht und mittels des unter Druck, insbesondere unter Luftdruck setzbaren Schlauches (13) unter Ausfüllung des Rohrendes und/oder des Übergangsbereichs zwischen Rohrende und anzuschließendem Teil in diesen Endbereich gedrückt wird.

6. Verfahren nach einem der vorhergehenden Ansprüche, dadurch gekennzeichnet, daß die Lenkstangen-Führungshülse (11) und die Sattel-Befestigungshülse (12) mit den passend abgelängten Abschnitten (6,9) durch Klebung verbunden werden.

7. Verfahren nach einem der vorhergehenden Ansprüche, dadurch gekennzeichnet, daß das Diagonalrohr (2) aus zwei analog dem Sattelrohr (1) und dem Horizontalrohr (3) gefertigten Einzelrohren (23, 24) hergestellt wird, wobei diese beiden Einzelrohre (23, 24) im Bereich zwischen Sattelrohr (1) und Lenkstangen-Führungshülse (11) durch eine Ummantelung (17) zusammengefaßt werden und im Bereich des Sattelrohres (1) eine gabelförmige Trennung dieser Einzelrohre (23, 24) derart vorgenommen wird, daß die beiden Einzelrohre (23, 24) die Hinterradgabel (5) bilden, und daß das Sattelrohr (1) und der Gabelungsbereich (18) der beiden Einzelrohre (23, 24) durch eine Wickelbandage (19) aus faser- und/oder gewebeverstärktem Kunststoffmaterial miteinander verbunden werden und die Endform und Endfestigkeit dieser Verbindung durch Aushärtung in einer heizbaren Form erreicht wird.

8. Verfahren nach einem der vorhergehenden Ansprüche, dadurch gekennzeichnet, daß das Horizontalrohr (3) sowohl mit dem Diagonalrohr (2) als auch mit dem Sattelrohr (1) über Wickelbandagen (20, 21) verbunden wird, wobei im Verbindungsbereich mit dem Sattelrohr (1) das Horizontalrohr über eine entsprechende Öffnung in das Innere des Sattelrohres eingeführt wird.

9. Verfahren nach einem der vorhergehenden Ansprüche, dadurch gekennzeichnet, daß der aus den einzelnen Bestandteilen zusammengefügte Rahmen in eine Endform eingebracht und durch Wärmeeinwirkung und Druck in seine endgültige Form gebracht wird.

10. Fahrradrahmen, insbesondere hergestellt nach einem der vorhergehenden Ansprüche und bestehend aus einem Sattelrohr, einem Diagonalrohr, einem Horizontalrohr, einer Hinterradgabel, einer integrierten Tretlageraufnahme, einer Lenkstangen-Führungshülse sowie einer Sattel-Befestigungshülse,
dadurch gekennzeichnet,
daß sich an die Verbindungsstellen (7, 8) zwischen Sattelrohr (1) und Horizontalrohr (3) bzw. Horizontalrohr (3) und Diagonalrohr (2) ablängbare Abschnitte (6, 9) anschließen, die zur Verbindung mit einer Sattel-Befestigungshülse (12) bzw. einer Lenkstangen-Führungshülse (11) bestimmt sind.

11. Fahrradrahmen nach Anspruch 10, dadurch gekennzeichnet, daß sämtliche Rohre aus faser- und/oder gewebeverstärktem Kunststoffmaterial, insbesondere unter Verwendung von Carbonfasermaterial bestehen und alle Verbindungen zwischen diesen Rohren unter Verwendung von Wickelbandagen (15, 17, 19, 20, 21) ausgeführt sind.

12. Fahrradrahmen nach Anspruch 10 oder 11, dadurch gekennzeichnet, daß das Diagonalrohr (2) aus zwei Einzelrohren (23, 24) besteht, die im Bereich zwischen Sattelrohr (1) und Lenkstangen-Führungshülse (11) durch eine Ummantelung (17) aus faser- und/oder gewebeverstärktem Kunststoffmaterial zusammengehalten und vor dem Sattelrohr (1) gabelförmig auseinandergeführt sind, wobei diese Einzelrohre im hinteren Bereich die Hinterradgabel (5) bilden.

13. Fahrradrahmen nach Anspruch 12, dadurch gekennzeichnet, daß in den freien Enden der Einzelrohre (23, 24) die Aufnahmeklauen (26) zur Halterung der Hinterradachse fixiert sind.

14. Fahrradrahmen nach einem der Ansprüche 10 bis 13, dadurch gekennzeichnet, daß das Horizontalrohr (3) mit dem Diagonalrohr über einen parallel zum Diagonalrohr (2) verlaufenden Abschnitt über eine Bandage (21) verbunden ist, und daß im Sattelrohr (1) eine Öffnung (25) zur Aufnahme eines abgewinkelten, sich in das Sattelrohr (1) erstreckenden Endes des Horizontalrohres (3) vorgesehen und die Verbindung zwischen Sattelrohr (1) und Horizontalrohr (3) über eine Bandage (20) realisiert ist.

15. Fahrradrahmen nach einem der Ansprüche 10 bis 14, dadurch gekennzeichnet, daß zumindest die Querschnitte (S1,S2,S3)von Diagonalrohr (2) und die Hinterradgabel (5) bildenden Einzelrohren stehend oval gestaltet sind.

16. Fahrradrahmen nach einem der Ansprüche 10 bis 15, dadurch gekennzeichnet, daß das zur Aufnahme des Tretlagers (10) bestimmte Metallgehäuse (14) mit dem unteren Ende des Sattelrohres (1) über Compositmaterial in Form von faser-und/oder gewebeverstärktem Kunststoffmaterial verbunden und bezüglich des Verbindungsbereichs zwischen Sattelrohr (1) und Diagonalrohr (2) beabstandet ist.

17. Fahrradrahmen nach einem der Ansprüche 10 bis 16, dadurch gekennzeichnet, daß in die aus Compositmaterial bestehenden Rohre Kabelführungen (27) und Trägerorgane (28, 29) für Kettenwerfer, Flaschenhalter und dergl. integriert sind.

## Claims

1. A method of manufacturing a bicycle frame comprising at least one seat tube, a down tube, a top tube and also a rear wheel fork, the frame having a pedal bearing, a saddle mounting sleeve and a handlebar guide sleeve, a closed, at least substantially triangular base frame (4) being formed by the seat tube (1), the down tube (2) and the top tube (3), with the rear wheel fork (5) being fixedly attached to the base frame (4) and the pedal bearing (10) being integrated thereto, characterized in that the base frame (4) is formed in such a way that, on the one hand, the seat tube (1) projects beyond the connection position (7) with the top tube (3) in the form of a first section (6) which can be cut to length and, on the other hand, that the down tube (2) projects beyond the connection position (8) with the top tube (3) in the form of a second section (9) which can be cut to length; and in that after the fixing of the respective frame size (T1, T2, T3), which takes place by the sections (6, 9) which can be cut to length, a connection is effected between these sections (6, 9) with the handlebar guide sleeve (11) and the saddle mounting sleeve (12) respectively.

2. Method in accordance with claim 1, characterized in that the individual tubes (1, 2, 3, 5) are manufactured of fibre and/or fabric reinforced plastic material, in particular using carbon fibre material, with these materials being wound around a core in the form of a hose (13) which is closed at one end and which is connectable to a pressure source, and are cured to the desired shape in a heatable die while the hose (13) is pressurized.

3. Method in accordance with either claim 1 or 2, characterized in that the lower end of the seat tube (1) is connected by means of wound bandages (15) of fibre and/or fabric reinforced plastic material with a metal housing (14) which receives the pedal bearing, with the bandages (15) being wound both around the metal housing (14) and also around the lower end of the seat tube (1), and in that curing and permanent bonding takes place in the heatable mould.

4. Method in accordance with claim 3, characterized in that the bandages (15) are first wound around the metal housing (14) and a receiving sleeve (22) is thereby formed from the bandages into which the end of the seat tube (1) is then introduced and is finally fixedly bonded with the metal housing (14) via the bandage (15) under the action of heat and pressure in the respective die.

5. Method in accordance with any one of the preceding claims, characterized in that a curable foam (16) is introduced into the region of the tube end which is to be closed and is forced into this end region by means of the hose (13) which can be set under pressure, and in particular under pneumatic pressure, while filling out the tube end and/or the transition between this tube end and the part to be attached thereto.

6. Method in accordance with any one of the preceding claims, characterized in that the handlebar guide sleeve (11) and the saddle mounting sleeve (12) are adhesively bonded to the sections (6, 9) which are suitably cut to length.

7. Method in accordance with any one of the preceding claims, characterized in that the down tube (2) comprises two individual tubes (23, 24) which are manufactured analogously to the seat tube (1) and the top tube (3), with these two individual tubes (23, 24) being combined together in the region between the seat tube (1) and the handlebar guide sleeve (11) by a jacket (17) and with a fork-like separation of these two individual tubes (23, 24) being effected in the region of the seat tube (1) in such a way that the two individual tubes (23, 24) form the rear wheel fork (5); and in that the seat tube (1) and the fork region (18) of the two individual tubes (23, 24) are bonded together by a wound bandage (19) of fibre and/or fabric reinforced plastic material and the end shape and end strength of this bond is achieved by curing in a heatable mould.

8. Method in accordance with any one of the preceding claims, characterized in that the top tube (3) is connected both with the down tube (2) and also with the seat tube (1) via wound bandages (20, 21) with the top tube being inserted in the connection region with the seat tube (1) into the interior of the seat tube via an appropriate opening.

9. Method in accordance with any one of the preceding claims, characterized in that the frame which is put together from the individual components is brought into a final die and is brought into its final shape by the action of heat and pressure.

10. Bicycle frame, in particular manufactured in accordance with any one of the preceding claims, and comprising a seat tube, a down tube, a top tube, a rear wheel fork, an integrated pedal bearing mount, a handlebar guide sleeve and also a seat mounting sleeve, characterized in that sections (6, 9) which can be cut to length adjoin the connection positions (7, 8) between the seat tube (1) and the top tube (3) and the top tube (3) and the down tube (2) respectively, with the sections (6, 9) being intended for the connection with a saddle mounting sleeve (12) and with a handlebar guide sleeve (11) respectively.

11. Bicycle frame in accordance with claim 10, characterized in that all tubes comprise fibre and/or fabric reinforced plastic material, in particular using carbon fibre material, and in that all connections between these tubes are executed using wound bandages (15, 17, 19, 20, 21).

12. Bicycle frame in accordance with either claim 10 or 11, characterized in that the down tube (2) comprises two individual tubes (23, 24) which are held together in the region between the seat tube (1) and the handlebar guide sleeve (11) by a jacket (17) of fibre and/or fabric reinforced plastic material and are led away from one another in a fork-like manner in front of the seat tube (1) with these individual tubes forming the rear wheel fork (5) in the rear region.

13. Bicycle frame in accordance with claim 12, characterized in that the receiving claws (26) for mounting the rear wheel axle are fixed in the free ends of the individual tubes (23, 24).

14. Bicycle frame in accordance with any one of claims 10 to 13, characterized in that the top tube (3) is connected with the down tube via a section which extends parallel to the down tube (2) via a bandage (21); and in that an opening (25) is provided in the seat tube (1) for accommodating an angled end of the top tube (3) which extends into the seat tube (1) and in that the connection between the seat tube (1) and the top tube (3) is realized via a bandage (20).

15. Bicycle frame in accordance with any one of claims 10 to 14, characterized in that at least the individual tubes which form the cross sections (S1, S2, S3) of the down tube (2) and of the rear wheel fork (5) are of an upright oval shape.

16. Bicycle frame in accordance with any one of claims 10 to 15, characterized in that the metal housing (14) which is intended to receive the pedal bearing (10) is connected with the lower end of the seat tube (1) via composite material in the form of a fibre and/or fabric reinforced plastic material and is spaced relative to the connection region between the seat tube (1) and the down tube (2).

17. Bicycle frame in accordance with any one of claims 10 to 16, characterized in that cable guides (27) and carrier members (28, 29) for chain throwers, bottle holders and the like are integrated into the tubes comprising composite material.

## Revendications

1. Procédé de fabrication d'un cadre de bicyclette comprenant au moins un tube de selle, un tube inférieur, un tube supérieur et une fourche de roue arrière, le cadre comprenant un palier de pédalier, un manchon de montage pour la selle et un manchon de guidage pour le guidon; un cadre de base (4) fermé et au moins sensiblement de forme triangulaire étant formé par le tube de selle (1), le tube inférieur (2) et le tube supérieur (3), la fourche de roue arrière (5) étant solidairement raccordée à ce cadre de base (4) et le palier de pédalier (10) y étant intégré, caractérisé en ce que le cadre de base (4) est formé de telle manière que d'une part, le tube de selle (1) dépasse l'emplacement de raccordement (7) avec le tube supérieur (3) sous la forme d'un premier tronçon (6) qui peut être coupé à longueur, et d'autre part, le tube inférieur (2) dépasse l'emplacement de raccordement (8) avec le tube supérieur (3) sous la forme d'un second tronçon (9) qui peut être coupé à longueur, et en ce que après fixation de la taille du cadre considéré (T1, T2, T3), ce qui est assuré au moyen des tronçons (6, 9) qui peuvent être coupés à longueur, on effectue une liaison de ces tronçons (6, 9) avec le fourreau de guidage du guidon (11) et le fourreau de montage de la selle (12), respectivement.

2. Procédé selon la revendication 1, caractérisé en ce que les tubes individuels (1, 2, 3, 5) sont réalisés en matière plastique renforcée par des fibres et/ou par du tissu, en particulier en utilisant des matériaux en fibres de carbone, ces matériaux étant enroulés autour d'un noyau sous la forme d'un tube souple (13) fermé à une extrémité qui peut être raccordé à une source de pression, et étant durcis sous la forme désirée dans un moule chauffable tandis que le tube souple (13) est mis sous pression.

3. Procédé selon l'une ou l'autre des revendications 1 et 2, caractérisé en ce que l'extrémité inférieure du tube de selle (1) est reliée au moyen de bandages (15) enroulés de matière plastique renforcée par des fibres et/ou du tissu à un boîtier métallique (14) qui reçoit le palier de pédalier, les bandages (15) étant enroulés à la fois autour du boîtier métallique (14) ainsi qu'autour de l'extrémité inférieure du tube de selle (1), et en ce que le durcissement et le collage permanent se produisent dans le moule chauffable.

4. Procédé selon la revendication 3, caractérisé en ce que les bandages (15) sont tout d'abord enroulés autour du boîtier métallique (14) et qu'un fourreau de réception (22) est ainsi formé par les bandages, dans lequel l'extrémité du tube de selle (1) est alors introduite et est finalement fixement collée au boîtier métallique (14) par l'intermédiaire du bandage (15) sous l'action de chaleur et de pression dans le moule considéré.

5. Procédé selon l'une quelconque des revendications précédentes, caractérisé en ce que l'on introduit une mousse durcissable (16) dans la région de l'extrémité du tube qui doit fermée, et que l'on force cette mousse dans cette région d'extrémité au moyen du tube souple (13) qui peut être mis sous pression, et en particulier sous pression pneumatique, en remplissant l'extrémité du tube et/ou la transition entre cette extrémité du tube et la partie qui doit y être attachée.

6. Procédé selon l'une quelconque des revendications précédentes, caractérisé en ce que le fourreau de guidage du guidon (11) et le fourreau de montage de la selle (12) sont collés aux tronçons (6, 9) qui sont coupés à longueur de façon convenable.

7. Procédé selon l'une quelconque des revendications précédentes, caractérisé en ce que le tube inférieur (2) comprend deux tubes individuels (23, 24) qui sont fabriqués de manière analogue au tube de selle (1) et au tube supérieur (3), ces deux tubes individuels (23, 24) étant combinés ensemble dans la région entre le tube de selle (1) et le fourreau de guidage du guidon (11) au moyen d'une chemise (17), une séparation de ces deux tubes individuels (23, 24) à la manière d'une fourche étant effectuée dans la région du tube de selle (1) d'une telle manière que les deux tubes individuels (23, 24) forment la fourche de roue arrière (5), et en ce que le tube de selle (1) et la région fourchue (18) des deux tubes individuels (23, 24) sont collés ensemble au moyen d'un bandage (19) enroulé de matière plastique renforcée de fibres et/ou de tissu, et la forme finale et la résistance finale de ce collage sont assurées par durcissement dans un moule chauffable.

8. Procédé selon l'une quelconque des revendications précédentes, caractérisé en ce que le tube supérieur (3 est relié à la fois au tube inférieur (2) et au tube de selle (1) au moyen de bandages (20, 21) enroulés, le tube supérieur étant introduit dans la région de raccordement avec le tube de selle (1) à l'intérieur du tube de selle via une ouverture appropriée.

9. Procédé selon l'une quelconque des revendications précédentes, caractérisé en ce que le cadre qui est assemblé à partir des composants individuels est mis dans un moule final et est amené à sa forme finale par l'action de chaleur et de pression.

10. Cadre de bicyclette, fabriqué en particulier selon l'une des revendications précédentes, et comprenant un tube de selle, un tube inférieur, un tube supérieur, une fourche de roue arrière, un palier de pédalier intégré, un fourreau de guidage de guidon et un fourreau de montage de selle, caractérisé en ce que des tronçons (6, 9) qui peuvent être coupés à longueur prolongent les emplacements de raccordement (7, 8) entre le tube de selle (1) et le tube supérieur (3), et entre le tube supérieur (3) et le tube inférieur (2) respectivement, les tronçons (6, 9) étant destinés au raccordement avec le fourreau de montage de la selle (12) et avec le fourreau de guidage du guidon (11) respectivement.

11. Cadre de bicyclette selon la revendication 10, caractérisé en ce que tous les tubes comprennent des matières plastiques renforcées par des fibres et/ou du tissu, en particulier en utilisant des fibres de carbone, et en ce que tous les raccordements entre ces tubes sont réalisés en utilisant des bandages enroulés (15, 17, 19, 20, 21).

12. Cadre de bicyclette selon l'une ou l'autre des revendications 10 et 11, caractérisé en ce que le tube inférieur (2) comprend deux tubes individuels (23, 24) qui sont tenus ensemble dans la région du tube de selle (1) et du fourreau de guidage du guidon (11) au moyen d'une chemise (17) de matière plastique renforcée de fibres et/ou de tissu, et sont menés en éloignement l'un de l'autre en avant du tube de selle (1), ces tubes individuels formant la fourche de roue arrière (5) dans la région postérieure.

13. Cadre de bicyclette selon la revendication 12, caractérisé en ce que les étriers récepteurs (26) pour le montage de l'arbre de la roue arrière sont fixés dans les extrémités libres des tubes individuels (23, 24).

14. Cadre de bicyclette selon l'une quelconque des revendications 10 à 13, caractérisé en ce que le tube supérieur (3) est raccordé au tube inférieur par l'intermédiaire d'un tronçon qui s'étend parallèlement au tube inférieur (2) et au moyen d'un bandage (21), et en ce qu'une ouverture (25) est prévue dans le tube de selle (1) pour recevoir une extrémité recourbée du tube supérieur (3) qui s'étend jusqu'à l'intérieur du tube de selle (1), et en ce que le raccordement entre le tube de selle (1) et le tube supérieur (3) est réalisé au moyen d'un bandage (20).

15. Cadre de bicyclette selon l'une quelconque des revendications 10 à 14, caractérisé en ce que au moins les tubes individuels qui forment les sections transversales (S1, S2, S3) du tube inférieur (2) et de la fourche de roue arrière (5) ont une forme ovale orientée verticalement.

16. Cadre de bicyclette selon l'une quelconque des revendications 10 à 15, caractérisé en ce que le boîtier métallique (14) destiné à recevoir le palier de pédalier (10) est raccordé à l'extrémité inférieure du tube de selle (1) au moyen de matériaux composites sous la forme de matières plastiques renforcées par des fibres et/ou du tissu, et est éloigné par rapport à la région de raccordement entre le tube de selle (1) et le tube inférieur (2).

17. Cadre de bicyclette selon l'une quelconque des revendications 10 à 16, caractérisé en ce que des guides de câble (27) et des organes de support (28, 29) pour des tendeurs de chaîne, des porte-bidon, et similaires, sont intégrés dans les tubes en matériaux composites.
